Europäisches Patentamt

European Patent Office

Office européen des brevets

(19)

(11) Publication number: **0 086 668**
A2

# (12) EUROPEAN PATENT APPLICATION

(21) Application number: 83300770.1

(22) Date of filing: 16.02.83

(51) Int. Cl.³: **B 60 J 7/04**

(30) Priority: 16.02.82 GB 8204509

(71) Applicant: **Idex (Jersey) Limited, 10 Royal Square, St-Helier Jersey Channel Islands (GB)**

(43) Date of publication of application: **24.08.83 Bulletin 83/34**

(72) Inventor: **Frampton, Jeffery Alan, 107, Route Du Nant D'Avril, CH-1217 Meyrin, Geneva (CH)**
Inventor: **Bartman, Nicholas, 32, Risborough Road Stoke Mandeville, Aylesbury Buckinghamshire (GB)**

(84) Designated Contracting States: **AT BE CH DE FR GB IT LI LU NL SE**

(74) Representative: **Clifford, Frederick Alan et al, MARKS & CLERK 57/60 Lincoln's Inn Fields, London WC2A 3LS (GB)**

(54) **Improved vehicle roof installation.**

(57) A vehicle roof cover 1 is formed as a suitably contoured and dimensioned polymer sheet e.g. of glass-reinforced plastic and not as hitherto in a thin vinyl layer. It is thick enough to accept suitable shaping to remove undesired features of the underlying panel (whether of accident or design) or to add desired features or surface finish of expensive appearance. It may be used for customising or damage-repair; in a valuable form of the invention the sheet 1 is apertured at 2 to accept a sunroof panel operable by a mechanism mounted on the sheet, and not directly on the vehicle roof panel of possibly unsuitable conformation.

1.

Title: "Improved Vehicle Roof Installation"

This invention relates to roof portions of motor vehicles, and in a particularly valuable form of the invention, to the openable roof portions of motor vehicles, commonly known as "sun-roofs".

The roof portion of motor vehicles generally comprises an extensive area of spray-finished pressed metal, of rather plain appearance. Because of its extensive area, it can be dented or subject to minor deformation damage. To cover such damage, or to make good after minor repairs it is known to glue "vinyl" fabric to the roof panel, but such vinyl sheet is very thin (typically 0.25 mm) and thus does not disguise any remaining surface blemishes.

The present invention provides a thicker, moulded, surface cover sheet for a vehicle roof to give a desired customised or damage-repaired appearance, and which particularly lends itself to the installation of sun-roofs.

Sun-roofs are constituted by a closure member, of metal or safety glass, which fits sealingly in a roof opening and is attached to a mechanism, usually contained within a flattened internal housing, whereby the closure is tilted, slid

2.

or folded when desired to provide overhead opening and ventilation. While the present invention provides equipment, and a method for its installation, generally suitable for all such sun-roofs it is of particular applicability to the so-called "sliding sun-roofs", and will be exemplified below in relation to a metal sliding sun-roof.

Such sun-roofs are in the form of a rectangular surrounding frame having within the long edges suitable drive cables attached to an electric motor also fixed to the frame. The closure member is a metal plate. It is attached at its edges to the cables, and is moved by them from a forward and upper position, where it seals the opening, to a rearward and lower position, within the frame and beneath the vehicle roof.

To fit such a sun-roof, a suitable hole is made in the vehicle roof; its edges are smoothed and the frame is attached from inside the vehicle, to the underside of the roof, so that the plate fits sealingly into the hole in its upper position. The hole can be made in the factory (e.g. at the initial pressing) or can be added when the sun-roof is desired as a post-purchase extra feature.

There is a need for fitting sun-roofs to on/off road rural vehicles, typically those four-wheeled vehicles for country use as passenger or light pick-up vehicles.

3.

These vehicles (e.g. those known under the Trade Mark "Range Rover") especially when in off-road use, do not travel at high speeds and can benefit from additional overhead ventilation to assist the normal motion-induced ventilation.

However, such vehicles, as one of their robust design characteristics, usually possess longitudinal parallel strengthening internal roof ribs. It is accordingly difficult if not impossible to fit most designs of sun-roof mechanism in the usual manner, since these ribs must be cut away, at least partially, to accommodate the frame and allow the closure plate to move.

The present invention provides in one aspect a cover for a vehicle roof panel in the form of a polymeric material so contoured and dimensioned and provided with one or more attachment means on the underside, as to fit closely and firmly over at least a major portion of a given vehicle roof.

Preferably, the sheet is such as to extend over at least the forward portion of the vehicle roof and combined with a closure member capable of fitting within the opening and in operative connection with a mechanism itself attached to the sheet, so as to constitute a sun-roof assembly.

4.

The mechanism can fold, tilt or slide. Thus, for example, a folding-roof mechanism will clamp the polymer sheet as a sandwich, whereas a sliding-roof mechanism will attach to the underside of the sheet.

Such an installation can fit over the roof of the given vehicle after this has been provided with a suitable opening to accommodate the closure plate mechanism. In other words , the installation is installed from above, as a form of "false roof" already equipped with the sun-roof features, and the operating mechanism lies within a hole formed in the vehicle roof and larger than the sun-roof opening itself.

A suitable sliding mechanism may be accommodated within a flattened surrounding frame, which may be adhered to the sheet of polymeric material, itself preferably a fibre-reinforced or glass-reinforced polymer. The sun-roof opening hole in this sheet can be formed, e.g. during moulding to the roof shape, with suitable smoothed or radiussed edges.

Each attachment means can be formed as double-sided adhesive pads.Alternatively, each can be formed as a plate held within the thickness of the polymer sheet, and having a protruding bolt which is passed for fastening through a suitably positioned hole in the vehicle roof.

5.

In another aspect the invention provides a method of installing a decorative or alternative roof structure to at least the major portion of a vehicle roof, comprising shaping a layer of polymeric material to match the dimensions and contours of the vehicle roof or major portion thereof; and attaching the layer from above to the said vehicle roof at the desired location by one or more attachment means.

Desired sealants e.g. silicones can be applied to roof rust or like blemishes before fitting; the sheet will cover and disguise any such repairs, with no shrinkage and good durability.

In a particular valuable form of this the invention provides a method of installing a vehicle sun-roof, comprising: shaping a layer of polymeric material to match the dimensions and contours of the vehicle roof, the layer having a hole therein of the desired shape and size; attaching to the underside of the layer a sun-roof operating mechanism in such a position that it can move a closure member to seal the hole in the layer; forming a hole in the vehicle roof large enough and so positioned as to accommodate the operating mechanism and overlap with the hole in the polymericlayer; and attaching the polymer layer, from above, over the vehicle roof.

6.

Since the sheet is thick enough to be a contoured and dimensioned object it is thick enough to carry an attractive embossed surface finish if desired, from 1 - 10 mm e.g. 2 - 5 mm being the usual thickness. Any colour can be used. Preferred polymers are GRP, or vacuum formed PVC.

The method of the invention can readily be applied to vehicles with internal roof strengthening ribs or like projections, and is preferably used on vehicles with a "drip rail" (i.e. surrounding roof guttering) which extends not only along the sides but also across the front and back of the roof. The polymer layer can then be so dimensioned as to terminate within the drip rail, so that the external appearance of the vehicle is unchanged except for the sun-roof opening. However, this is not strictly necessary, and the sheet may be used with a "bevelled" edge.

The invention will be further desribed, by way of example only, with reference to the accompanying drawings, in which:

Figure 1 is a general top view of a sun-roof installation according to the invention,

Figure 2 is an enlarged diagrammatic section along II-II of Figure 1, and

Figure 3 is an enlarged diamgrammatic section

7.

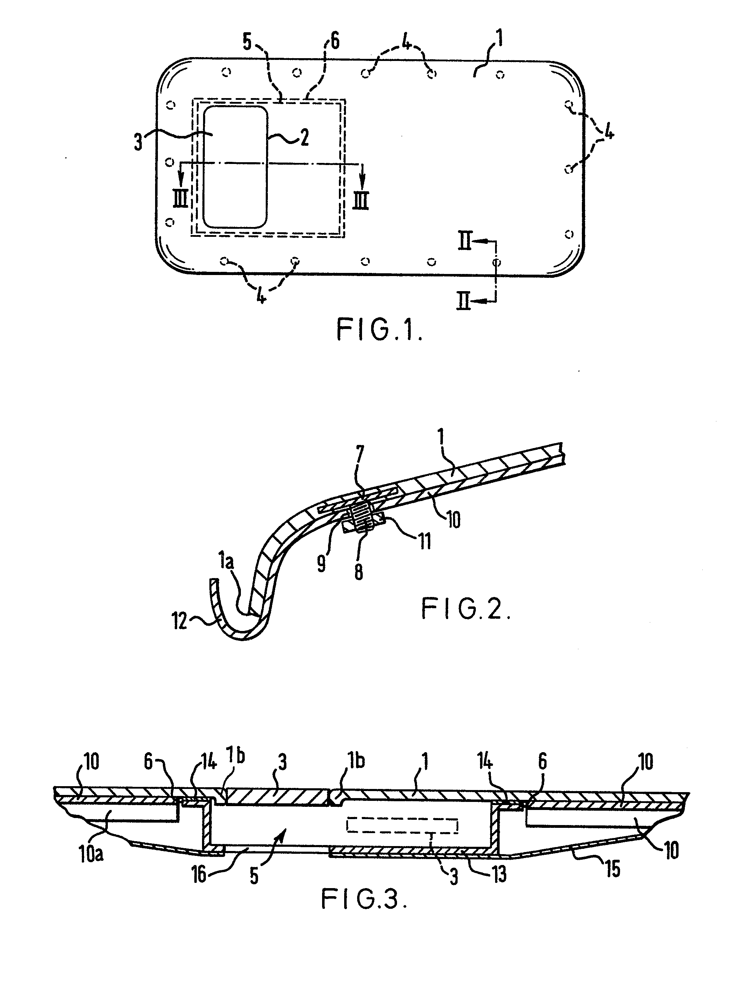

along III-III of Figure 1.

A typical installation by way of example, viewed from above, consists of a glass-reinforced polymer sheet 1, preferably textured to give a so-called "vinyl" effect, and contoured and dimensioned to fit exactly over a vehicle roof, for example the roof of a typical on/off road rural vehicle. In a suitable hole 2 in the sheet 1 is located a steel closure plate 3. Around the underside of the sheet there can be a number of attachment members (see Figure 2). Alternatively, doublesided polyethylene adhesive pads may be used. Attached by adhesives to the underside is the operating mechanism 5 for plate 3. This operating mechanism 5 fits within rectangular hole 6 in the vehicle roof (see Figure 3).

Figure 2 shows how each attachment member 4 can be formed as a steel plate 7 within the thickness of sheet 1, for mounting a bolt 8 which passes through hole 9 in vehicle roof 10 to be secured by nut 11. It also shows a section of drip rail 12, the sheet 1 being preferably of a size that its edge 1a lies in and is thus generally hidden by such a drip rail. Preferably, the vehicle roof has a front and back drip rail as well as side drip rails.

Figure 3 shows in full lines the upper forward position of plate 3 (as in Figure 1) at which it fits

8.

sealingly into radiussed edges 1b around the hole 2. It also shows its lower rearward position, at which the sun-roof is open , in dashed lines. The cable drive mechanism to move plate 3 between these positions is conventional and is not shown, for clarity of explanation. Surrounding frame 13 is adhered at 14 to the underside of sheet 1 and within hole 6 of the vehicle roof 10. Roof 10 possesses strengthening ribs 10a, which are cut away around the edges of hole 6, but not otherwise altered. The installation is completed by head-lining 15, which is attached around the opening 16 in the frame and thus conceals the mechanism from inside.

The production of a suitable roof-covering can be carried out in a mould. Typically, however, sheet 1 involves preparation of a suitable master "negative" mould from an existing vehicle roof and use of this master negative for preparation of numerous copies.

In a typical sequence manufacture is carried out as follows:-

1. A vehicle roof is cleaned and dried, painted with a release agent (e.g. a silicone), gel-coated, and covered with a 6 mm layer of glass-reinforced polymer. This is removed as an "initial negative" of the exact state of the vehicle roof.

2. The "initial negative" is subjected to the same release agent, gel-coating, and GRP procedure to give an

9.

"initial positive" pattern i.e. exactly resembling the vehicle roof. This is strengthened at the back with wooden struts to retain an accurate shape.

3.          Any undesired ornamentation (flutes, grooves, seams etc )is filled in with local applications of GRP polymer.

4.          If a sun-roof sheet is being manufactured, a suitable hole is cut in the "initial positive", and any desired finishing features e.g. a leading edge air-deflection rib are moulded in place.

5.          If desired for surface appearance, embossed "vinyl" sheet is glued closely over the surface of the "initial positive". The seams between adjacent sheets can if desired be extra ornamental features.

6.          The "initial positive" is treated with release agent, gel-coating and a 6 mm or more GRP coating, which is pulled off as a "final negative" with undesired features removed, extra features added, and vinyl-embossed if necessary. Rigidifying bars are placed at the back surface.

7.          This "final negative" can be used for up to 500 "pulls" each using the release agent, gel-coating and GRP

10.

technique to a 2 - 3 mm thickness by way of example. Adhesive pads and/or fixing bolts can also be added to these final "pulls" to facilitate fixing over a vehicle roof.

0086668

11.

CLAIMS:

1. A cover for a vehicle roof panel characterised in that it comprises a sheet of polymeric material contoured and dimensioned, and provided with one or more attachment means on its underside, as to fit closely and firmly over at least a major portion of a given vehicle roof.

2. A cover as claimed in claim 1 such as to extend over at least the forward portion of the vehicle roof, characterised in that the sheet has an opening therein with a closure member capable of fitting within the opening and in operative connection with a mechanism itself attached to the sheet so as to constitute a sun-roof assembly.

3. A cover as claimed in claim 2 in the form of a sun-roof assembly, characterised in that the sun-roof is a sliding sun-roof and the mechanism is attached to the underside of the sheet.

4. A cover as claimed in claim 3 characterised in that the sun-roof assembly is located within a flattened surrounding frame itself adhered to the underside of the sheet to lie within a hole cut in the vehicle roof.

5. A cover as claimed in any of claims 1 to

12.

4 characterised in that the or each attachment means is a double-sided adhesive pad.

6. A cover as claimed in any one of claims 1 to 4 characterised in that the or each attachment means comprises a plate portion held within the sheet thickness and a protruding bolt for passing through a hole in the underlying vehicle roof.

7. A cover as claimed in any one preceding claim characterised in that it is decoratively embossed at its upper surface.

8. A cover as claimed in any one preceding claim characterised in that it is from 1 to 10 mm, preferably from 2 to 5 mm thick.

9. A cover as claimed in any one preceding claim characterised in that it is made of glass-reinforced polymer.

10. A method of installing a decorative or alternative roof structure as claimed in claim 1 to at least the major portion of a vehicle roof, characterised in that it comprises shaping a layer of polymeric material to match the dimensions and contours of the vehicle roof or a major portion thereof, and attaching

13.

the layer from above to the said vehicle roof at the desired location by one or more attachment means.

11.    A method as claimed in claim 10 for installing a vehicle sun-roof, using a layer having a hole therein of the desired shape and size of the sun-roof opening, characterised in that it comprises attaching to the underside of the layer a sun-roof operating mechanism in such a position that it can move a closure member to seal the hole in the layer; and forming a hole in the vehicle roof large enough and so positioned as to accommodate the operating mechanism and overlap with the hole in the polymer layer, prior to attaching the polymer layer, fromabove, over the vehicle roof.

1/1

FIG.1.

FIG.2.

FIG.3.